# EUROPEAN PATENT APPLICATION

(11) **EP 4 406 915 A1**
(43) Date of publication of application: **31.07.2024**
(21) Application number: 23843969.9
(22) Date of filing: 13.12.2023
(51) Int. Cl.: C01B 25/455

(54) **METHOD FOR PREPARING CARBON-COATED SODIUM IRON FLUOROPHOSPHATE FROM WASTE LITHIUM IRON PHOSPHATE, AND USE THEREOF**

(30) Priority: 13.12.2022 CN 202211602946
(71) Applicant: Hubei Wanrun New Energy Technology Co., Ltd., Shiyan, Hubei 442500 (CN)
(72) Inventor: WANG, Qin, Shiyan, Hubei 442500 (CN); HUANG, Shanshan, Shiyan, Hubei 442500 (CN); YANG, Jiaojiao, Shiyan, Hubei 442500 (CN)
(74) Representative: Dantz, Jan Henning
(86) International application number: PCT/CN2023/138502
(87) International publication number: WO 2024/125561

(57) **Abstract**

The present invention relates to the field of sodium-ion battery technology, and specifically, to a method for preparing carbon-coated sodium iron fluorophosphate from waste lithium iron phosphate and the application thereof. The method for preparing carbon-coated sodium iron fluorophosphate from waste lithium iron phosphate includes: mixing a waste lithium iron phosphate material with an alkaline solution for reaction, followed by solid-liquid separation, to obtain an aluminum-containing filtrate and a lithium iron phosphate filter residue; mixing the lithium iron phosphate filter residue, aluminum chloride and sodium chloride uniformly, followed by vacuum calcination, to obtain a calcination material; and mixing the calcination material with at least one of a sodium source, an iron source and a phosphorus source uniformly to obtain a mixture to which a fluorine source, a carbon source and a solvent are added for uniformly mixing, followed by drying and calcination sequentially to obtain the carbon-coated sodium iron fluorophosphate. The method has the advantages of low costs, a high added value, a short process, and a high recovery rate, and the carbon-coated sodium iron fluorophosphate obtained from the method has excellent electrochemical performance.

## Description

### CROSS-REFERENCE TO RELATED APPLICATIONS

This application claims priority to Chinese Patent Application No. CN2022116029466 filed on December 13, 2022 and entitled "METHOD FOR PREPARING CARBON-COATED SODIUM IRON FLUOROPHOSPHATE FROM WASTE LITHIUM IRON PHOSPHATE AND APPLICATION THEREOF".

### TECHNICAL FIELD

The present invention relates to the field of sodium-ion battery technology, in particular, to a method for preparing carbon-coated sodium iron fluorophosphate from waste lithium iron phosphate and application thereof.

### BACKGROUND

Research on sodium ion batteries has attracted continuous attention in recent years due to the abundant reserves of sodium resources and a working principle similar to that of lithium-ion batteries, and the sodium ion battery is one of the new energy storage technologies expected to promote low-cost applications and sustainable development of energy storage technology. Polyanionic compounds are a class of high-performance and high-safety cathode materials which have been widely studied, and have strong covalent bonds in their structures that facilitate stabilization of the structural framework, thereby effectively improving the safety of the electrode during charging and discharging.

Sodium iron phosphate is generally considered to have poor electrochemical activity, and introduction of fluorine to form sodium iron fluorophosphate can increase the electrochemical activity and the voltage plateau, and therefore, such modification is relatively successful for cathode materials of sodium batteries.

Waste lithium iron phosphate is mainly from waste electrode sheets produced during production of the batteries, that is, the electrode sheets produced by disassembling the scrapped batteries. According to statistic results, an annual output of lithium iron phosphate was 480,000 tons in 2021, and was estimated to reach 1 million tons in 2022. It has become a research hotspot to effectively utilize these resources.

In addition, sodium batteries are becoming an increasing important development trend in the future, especially with a gradual rise in the price of lithium. Therefore, it is of great significance to prepare sodium battery materials from scrapped lithium battery resources.

In view of the above, the present invention is proposed.

### SUMMARY

An object of the present invention is to provide a method for preparing carbon-coated sodium iron fluorophosphate from waste lithium iron phosphate having the advantages of low costs, a high added value, a short process, and a high recovery rate, and the carbon-coated sodium iron fluorophosphate obtained from the method has excellent electrochemical performance.

Another object of the present invention is to provide a cathode sheet.

Still another object of the present invention is to provide a sodium-ion battery.

To achieve the above objects of the present invention, the following technical schemes are adopted.

In a first aspect, the present invention provides a method for preparing carbon-coated sodium iron fluorophosphate from waste lithium iron phosphate, including steps as described below.
(a) Mixing a waste lithium iron phosphate material with an alkaline solution for reaction, followed by solid-liquid separation, to obtain an aluminum-containing filtrate and a lithium iron phosphate filter residue.

The waste lithium iron phosphate material includes electrode sheets that are produced by disassembling batteries after the batteries are scrapped, and the main components of the batteries include lithium iron phosphate and aluminum.

In step (a), the purpose of reacting the waste lithium iron phosphate material with the alkaline solution is to allow the aluminum in the waste lithium iron phosphate material to react and dissolve.

In some specific embodiments of the present invention, the reaction in step (a) is performed at room temperature without heating since a large amount of heat is generated during the reaction of aluminum with sodium hydroxide.

In some specific embodiments of the present invention, in step (a), the reaction continues until bubbles disappear, that is, no more bubbles emerge. Preferably, in step (a), the reaction is performed for 1 hour to 10 hours, including but not limited to, 2 hours, 3 hours, 4 hours, 5 hours, 6 hours, 7 hours, 8 hours, 9 hours, or a value in a range between any two thereof.

The main component of the aluminum-containing filtrate is metaaluminate ions.

The main component of the lithium iron phosphate filter residue is lithium iron phosphate.

(b) Mixing the lithium iron phosphate filter residue, aluminum chloride and sodium chloride uniformly, followed by vacuum calcination to obtain a calcination material.

In the present invention, aluminum chloride and sodium chloride are used as additives for calcination, such that not only chlorination calcination can be achieved, but also lithium tetrachloroaluminate can be formed via the reaction between aluminum chloride and lithium element. By utilizing the principle of a low boiling point of lithium tetrachloride, lithium element is evaporated while sodium element is retained, and most other elements such as phosphorus and iron are also retained.

That is, the main component of the calcination material is sodium iron phosphate.

During the vacuum calcination, lithium tetrachloroaluminate escapes in the form of a waste gas.

The vacuum calcination is carried out under vacuum atmosphere, which can decrease the boiling point of lithium tetrachloroaluminate and the calcination temperature, thereby lowering the energy consumption while fully separating lithium tetrachloroaluminate.

(c) Mixing the calcination material with at least one of a sodium source, an iron source and a phosphorus source uniformly to obtain a mixture to which a fluorine source, a carbon source and a solvent are added for uniformly mixing, followed by drying and calcination sequentially to obtain the carbon-coated sodium iron fluorophosphate.

The sodium source, iron source and phosphorus source are used for supplementation of sodium, iron and phosphorus, respectively.

On the one hand, the carbon source is used as a reductant to reduce divalent iron to trivalent iron; on the other hand, the carbon source is further used as a coating agent and coated on the surface of sodium iron fluorophosphate to enhance electrical conductivity.

That is, the carbon-coated sodium iron fluorophosphate prepared in step (c) according to the present invention includes sodium iron fluorophosphate and a carbon coating layer at least partially applied on the surface of the sodium iron fluorophosphate.

The method for preparing carbon-coated sodium iron fluorophosphate from waste lithium iron phosphate provided in the present invention has a short process flow, low cost, high environmental friendliness, high recovery rates of iron and phosphorus, and can produce cathode material, i.e., carbon-coated sodium iron fluorophosphate, for sodium batteries with high performance.

In some specific embodiments of the present invention, a mass percentage of carbon in the carbon-coated sodium iron fluorophosphate is 1% to 5%, including but not limited to, 2%, 3%, 4%, or a value in a range between any two thereof.

Preferably, in step (a), a mass ratio of the waste lithium iron phosphate material to the alkaline solution is 1:5-15, including but not limited to, 1:6, 1:7, 1:8, 1:9, 1:10, 1:11, 1:12, 1:13, 1:14, or a value in a range between any two thereof.

Preferably, the alkaline solution includes a sodium hydroxide solution which facilitates subsequent recovery to produce sodium carbonate.

Preferably, a molar concentration of the alkaline solution is 3 mol/L to 5 mol/L, including but not limited to, 3.5 mol/L, 4 mol/L, 4.5 mol/L, or a value in a range between any two thereof.

Preferably, in step (a), the aluminum-containing filtrate is reused until a molar concentration of hydroxide ions in the aluminum-containing filtrate is below 0.2 mol/L, including but not limited to, 0.15 mol/L, 0.1 mol/L, 0.05 mol/L, 0.01 mol/L, or a value in a range between any two thereof, to obtain a waste aluminum-containing solution.

Preferably, step (a) further includes recovering the waste aluminum-containing solution to prepare aluminum chloride and sodium carbonate.

Preferably, the recovering includes: introducing carbon dioxide into the waste aluminum-containing solution to decrease a pH of the waste aluminum-containing solution to 9-11, including but not limited to, 9.3, 9.5, 10, 10.5 or 10.8, or a value in a range between any two thereof, followed by solid-liquid separation, to obtain an aluminum hydroxide precipitate and a sodium carbonate filtrate. The aluminum hydroxide precipitate is mixed with hydrochloric acid for reaction, and then concentrated and crystallized to obtain aluminum chloride. The sodium carbonate filtrate is concentrated and crystallized to obtain sodium carbonate.

In some specific embodiments of the present invention, in the process of introducing carbon dioxide, a temperature of the mixed materials is 40 °C to 60 °C, including but not limited to, 42 °C, 45 °C, 50 °C, 55 °C, 58 °C, or a value in a range between any two thereof.

The aluminum chloride produced can be used in step (b).

The sodium carbonate produced can be used as a sodium source in step (c).

In the present invention, all the components in the waste lithium iron phosphate material are sufficiently utilized, with aluminum (aluminum foil) being used to prepare aluminum chloride, and the sodium hydroxide solution (the alkaline solution) for preparing sodium carbonate, reducing waste generation and saving costs.

Preferably, in step (b), a molar ratio of lithium element, aluminum chloride, and sodium chloride in the lithium iron phosphate filter residue is 1:1.2-1.5:1.02-1.05, for example, 1:1.2:1.02, 1:1.2:1.03, 1:1.2:1.04, 1:1.2:1.05, 1:1.3:1.02, 1:1.3:1.03, 1:1.3:1.04, 1:1.3:1.05, 1:1.4:1.02, 1:1.4:1.03, 1:1.4:1.04, 1:1.4:1.05, 1:1.5:1.02, 1:1.5:1.03, 1:1.5:1.04, or 1:1.5:1.05.

Preferably, in step (b), the vacuum calcination is performed at a temperature of 400 °C to 600 °C, including but not limited to, 420 °C, 450 °C, 500 °C, 550 °C, 580 °C, or a value in a range between any two thereof; and the time of the vacuum calcination is 4 hours to 6 hours, including but not limited to, 4.5 hours, 5 hours, 5.5 hours, or a value in a range between any two thereof.

A vacuum degree of the vacuum calcination is -0.04 MPa to -0.08 MPa, including but not limited to, -0.05 MPa, -0.06 MPa, -0.07 MPa or a value in a range between any two thereof.

Preferably, in step (b), a waste gas material produced during the vacuum calcination is collected and mixed with ammonia water for aluminum precipitation reaction (namely, a reaction that produces aluminum hydroxide precipitate), followed by solid-liquid separation to obtain a solid material which is sintered to obtain alumina, a liquid material obtained from the solid-liquid separation is mixed with sodium carbonate for lithium precipitation reaction (namely, a reaction that produces lithium carbonate precipitate), followed by solid-liquid separation to obtain lithium carbonate.

A main component of the waste gas material produced during the vacuum calcination is lithium tetrachloroaluminate. The waste gas material is mixed with ammonia water, aluminum ions react with ammonia water to form aluminum hydroxide precipitate which is the solid material obtained from the solid-liquid separation. The aluminum hydroxide precipitate is sintered to obtain alumina.

In some specific embodiments of the present invention, the alumina produced can react with hydrochloric acid to produce aluminum chloride which is used in subsequent step (b).

Meanwhile, the liquid material obtained from the solid-liquid separation contains lithium ions and is mixed with sodium carbonate for reaction, to obtain lithium carbonate.

Preferably, a molar concentration of the ammonia water is 0.01 mol/L to 0.1 mol/L, including but not limited to, 0.02 mol/L, 0.03 mol/L, 0.04 mol/L, 0.05 mol/L, 0.06 mol/L, 0.07 mol/L, 0.08 mol/L, 0.09 mol/L, or a value in a range between any two thereof.

In some specific embodiments of the present invention, a molar ratio of nitrogen element in the ammonia water to aluminum element in the waste gas material is 3.1-6:1, including but not limited to, 3.2:1, 3.3:1, 3.4:1, 3.5:1, 3.7:1, 3.9:1, 4:1, 4.5:1, 5:1 and 5.5:1 or a value in a range between any two thereof.

In some specific embodiments of the present invention, during the vacuum calcination, the waste gas from calcination is extracted using an induced draft fan, then condensed through a condenser to have a temperature less than or equal to 150 °C, followed dust collection through a dust collection cloth bag, then through water spray absorption, to obtain the waste gas material.

At present, the price of lithium carbonate is about half 500000 CNY/ton, and the price of sodium iron fluorophosphate is about 85000 CNY/ton.

It can be seen that in the present invention, complete recovery of all components (all elements including phosphorus, iron and lithium) can be achieved, not only lithium can be recovered to obtain lithium carbonate, but also elements such as iron and phosphorus can be used to prepare sodium iron fluorophosphate, and therefore, the added value of the product is extremely high.

Preferably, the aluminum precipitation reaction is performed at a temperature of 40 °C to 80 °C, including but not limited to, 45 °C, 50 °C, 55 °C, 60 °C, 65 °C, 70 °C, 75 °C, or a value in a range between any two thereof. The aluminum precipitation reaction is performed for 1 hour to 3 hours, including but not limited to, 1.5 hours, 2 hours, 2.5 hours, or a value in a range between any two thereof.

Preferably, the lithium precipitation reaction is performed at a temperature of 60 °C to 90 °C, including but not limited to, 65 °C, 70 °C, 75 °C, 80 °C, 85 °C, or a value in a range between any two thereof. The lithium precipitation reaction is performed for 1 hour to 3 hours, including but not limited to, 1.5 hours, 2 hours, 2.5 hours, or a value in a range between any two thereof.

Preferably, in step (c), contents of Na element, Fe element and P element in the calcination material are determined before the calcination material is mixed with at least one of the sodium source, the iron source and the phosphorus source, and components are configured such that the mixture has Na element, Fe element and P element in a molar ratio of 0.95-0.98:1:1.02-1.05. The foregoing molar ratio may be, for example, 0.95:1:1.02, 0.96:1:1.02, 0.97:1:1.02, 0.98:1:1.02, 0.95:1:1.03, 0.96:1:1.03, 0.97:1:1.03, 0.98:1:1.03, 0.95:1:1.04, 0.96:1:1.04, 0.97:1:1.04, 0.98:1:1.04, 0.95:1:1.05, 0.96:1:1.05, 0.97:1:1.05 or 0.98:1:1.05.

That is, the calcination material is sampled, the contents of Na, Fe and P elements in the calcination material are detected, the molar ratio of Na element to Fe element to P element in the calcination material is calculated, and then at least one of the raw materials of sodium source, iron source and phosphorus source is added based the molar ratio of Na element to Fe element to P element which is 0.95-0.98:1:1.02-1.05 (one, two or three raw materials can be added based on the calculation result).

Preferably, the sodium source includes at least one of sodium carbonate, sodium bicarbonate and sodium acetate; the iron source includes at least one of iron oxide red, ferrous oxalate and iron acetate; and the phosphorus source includes at least one of phosphoric acid, ammonium monohydrogen phosphate and ammonium dihydrogen phosphate.

Preferably, in step (c), the fluorine source includes sodium fluoride.

Preferably, a molar ratio of the fluorine source to Fe element in the mixture is 0.95-0.98:1, including but not limited to, 0.95:1, 0.96:1, 0.97:1, 0.98:1, or a value in a range between any two thereof.

Preferably, in step (c), the carbon source includes at least one of glucose, sucrose, polyethylene glycol and starch.

Preferably, a mass ratio of the carbon source to the calcination material is 0.2-0.3:1, including but not limited to, 0.21:1, 0.22:1, 0.23:1, 0.24:1, 0.25:1, 0.26:1, 0.27:1, 0.28:1, 0.29:1, or a value in a range between any two thereof.

Preferably, in step (c), the solvents include water and/or an organic solvent. More preferably, the solvent is water.

In some specific embodiments of the present invention, the organic solvent can be, but not limited to, any conventional volatile solvent such as ethanol, propanol or ethylene glycol.

Preferably, in step (c), the fluorine source, the carbon source and the solvent are added and then ground to be mixed uniformly.

More preferably, the fluorine source, the carbon source and the solvent are ground until a particle size of the solid particles in the mixed slurry is 200 nm to 400 nm, including but not limited to, 220 nm, 250 nm, 300 nm, 350 nm , 380 nm, or a value in a range between any two thereof.

Preferably, in step (c), the drying includes spray drying.

More preferably, a particle size of a dried material obtained from spray drying is 10 µm to 30 µm, including but not limited to, 12 µm, 15 µm, 20 µm, 25 µm, 28 µm, or a value in a range between any two thereof.

In some specific embodiments of the present invention, a water content in the dried material obtained from the spray drying is less than 0.5 wt%, including but not limited to, 0.4 wt%, 0.3 wt%, 0.2 wt%, 0.1 wt%, or a value in a range between any two thereof.

Preferably, in step (c), the calcination is performed at a temperature of 550 °C to 650 °C, including but not limited to, 560 °C, 570 °C 580 °C, 590 °C, 600 °C, 610 °C, 620 °C, 630 °C, 640 °C, or a value in a range between any two thereof. A holding time of the calcination is 4 hours to 6 hours, including but not limited to, 4.5 hours, 5 hours, 5.5 hours, or a value in a range between any two thereof.

In some specific embodiments of the present invention, in step (c), the heating rate during the calcination process is 100 °C to 150 °C/h, including but not limited to, 110 °C/h, 120 °C/h, 130 °C/h, 140 °C/h, or a value in a range between any two thereof.

In some specific embodiments of the present invention, in step (c), after the calcination is completed, the material is cooled to a temperature of ≤ 100 °C before being discharged.

In some specific embodiments of the present invention, in step (c), the calcination is performed in an inert atmosphere, which is, for example, but is not limited to, a nitrogen atmosphere and/or an argon atmosphere. Preferably, an oxygen content in the inert atmosphere is less than 5 ppm, including but not limited to, 4 ppm, 3 ppm, 2 ppm, 1 ppm, or a value in a range between any two thereof. Preferably, the humidity of the inert atmosphere is less than 3%, including but not limited to, 2%, 1%, 0.5%, or a value in a range between any two thereof.

In some specific embodiments of the present invention, in step (c), during the heating stage of the calcination, an induced draft fan is connected for ventilation to extract the waste gas from the heating stage.

Preferably, the step (c) further includes pulverization, screening and iron removal in sequence after the calcination.

In some specific embodiments of the present invention, the pulverization can be any conventional pulverization method, for example, but not limited to, jet mill.

In some specific embodiments of the present invention, the screening can be any conventional screening method, for example, but not limited to, screening via an ultrasonic vibrating screen.

In some specific embodiments of the present invention, the iron removal can be any conventional iron removal method, for example, but not limited to, iron removal via an electromagnetic iron remover. Preferably, iron is removed until the magnetic substance in the material is less than 1 ppm, including but not limited to, 0.8 ppm, 0.5 ppm, 0.3 ppm, 0.1 ppm, or a value in a range between any two thereof.

In some specific embodiments of the present invention, the method further includes vacuum packaging in a constant temperature and humidity chamber after iron is removed.

Preferably, the D50 particle size of the carbon-coated sodium iron fluorophosphate obtained after the pulverization and screening is 0.5 µm to 2 µm.

In a second aspect, the present invention provides a cathode sheet prepared mainly with the carbon-coated sodium iron fluorophosphate produced through the above method for preparing carbon-coated sodium iron fluorophosphate from waste lithium iron phosphate.

In a third aspect, the present invention provides a sodium-ion battery including the cathode sheet.

The sodium-ion battery has low costs and excellent electrochemical performance.

Compared with the prior art, the beneficial effects of the present invention are as below:
(1) The method for preparing carbon-coated sodium iron fluorophosphate from waste lithium iron phosphate provided in the present invention has a short process, low cost, high recovery rates of iron and phosphorus, and the produced carbon coated sodium iron fluorophosphate has low impurity content and excellent electrochemical performance.
(2) The method for preparing carbon-coated sodium iron fluorophosphate from waste lithium iron phosphate provided in the present invention can achieve complete recovery of phosphorus, iron and lithium elements. Not only lithium can be recovered to obtain lithium carbonate, but also elements such as iron and phosphorus can be used to prepare sodium iron fluorophosphate, and therefore, the added value of the product is high.
(3) The method for preparing carbon-coated sodium iron fluorophosphate from waste lithium iron phosphate provided in the present invention can sufficiently utilize the waste gas and the waste solution produced in the recovery process, which reduces generation of waste and the costs, thereby avoiding a waste of resources.

### BRIEF DESCRIPTION OF DRAWINGS

In order to describe the technical solutions in the specific embodiments of the present invention or in the prior art more clearly, a brief introduction will be given below to the drawings required in the specific embodiments or prior art description. It is apparent that the drawings in the following description are some embodiments of the present invention. For those skilled in the art, other drawings can be obtained based on these drawings without inventive labor.
FIG. 1 shows the charge-discharge curve at a rate of 0.1C of the carbon-coated sodium iron fluorophosphate prepared in Example 1 according to the present invention;
FIG. 2 shows a scanning electron microscope (SEM) image of the carbon-coated sodium iron fluorophosphate prepared in Example 1 according to the present invention; and
FIG. 3 shows an X-ray diffraction (XRD) pattern of the carbon-coated sodium iron fluorophosphate prepared in Example 1 according to the present invention.

### DETAILED DESCRIPTION

The following will provide a clear and complete description of the technical solutions of the present invention in conjunction with the drawings and specific embodiments. However, a person having ordinary skill in the art will understand that the embodiments described below are part of the present invention, not all of them, and are only intended to illustrate the present invention and should not be regarded as limiting its scope. Based on the embodiments in the present invention, all other embodiments obtained by a person having ordinary skill in the art without inventive labor fall within the scope of protection of the present invention. If specific conditions are not specified in the example, they shall be carried out according to conventional conditions or conditions recommended by the manufacturer. The reagents or instruments used without specifying the manufacturer are conventional products that commercially available.

### Example 1

The method for preparing carbon-coated sodium iron fluorophosphate from waste lithium iron phosphate provided in this example includes steps of:
(1) 10 kg of waste lithium iron phosphate material was mixed with 100 kg of sodium hydroxide solution at a molar concentration of 4 mol/L for reaction to dissolve aluminum, the reaction was terminated after bubbles disappeared (the reaction time was 3.5 hours) and then a resulting mixture was filtered, to obtain a first aluminum-containing filtrate and a lithium iron phosphate filter residue.

The main impurity in the waste lithium iron phosphate material was aluminum foil, which accounted for 20.5% of the mass fraction. The elemental content detection results of the first aluminum-containing filtrate (volume of 80.05L) obtained as mentioned above are shown in Table 1 below.

**Table 1 Test Results of Element Contents of First Aluminum-Containing Filtrate**

| Indexes | Na | Al | Li | OH- |
|---|---|---|---|---|
| Content | 99.94 g/L | 25.61 g/L | 0.002 g/L | 1.42 mol/L |

(2) The aluminum-containing filtrate obtained in step (1) was reused to be mixed with 10 kg of waste lithium iron phosphate material for reaction until the hydroxide ions were consumed to a molar concentration equal to or less than 0.18 mol/L, followed by filtration, to obtain a second aluminum-containing filtrate (volume of 76.46 L). The second aluminum-containing filtrate was sampled and tested, and the results are shown in Table 2.

**Table 2 Test Results of Element Contents of Second Aluminum-Containing Filtrate**

| Indexes | Na | Al | Li | OH- |
|---|---|---|---|---|
| Content | 104.35 g/L | 39.71 g/L | 0.003 g/L | 0.17 mol/L |

Carbon dioxide was introduced into the second aluminum-containing filtrate at a temperature of 50 °C, then measure the online pH of the filtrate, after the pH was decreased to 10.1, the introduction of carbon dioxide was terminated, and the resulting mixture was continuously stirred for reaction for 50 minutes and then filtered to obtain an aluminum hydroxide precipitate and a sodium carbonate filtrate.

Hydrochloric acid was added to the aluminum hydroxide precipitate for dissolution, the pH at an endpoint was maintained at 1.3 to obtain an aluminum chloride solution which was then concentrated and crystallized to obtain aluminum chloride crystal, the purity of aluminum chloride crystal was measured to be 99.4 wt%, and the aluminum chloride crystal was stored for later use (for step (3) below).

The obtained sodium carbonate filtrate was concentrated and crystallized to obtain sodium carbonate. The sodium carbonate filtrate was concentrated until a baume degree was 52, and then cooled and crystallized, the cooling time was 12 hours, the sodium carbonate filtrate was cooled to an endpoint temperature of 25 °C, and then centrifuged and dried. The purity of the sodium carbonate was measured to be 99.2 wt%, and the sodium carbonate was stored for later use as a sodium source (for step (4) below).

(3) Aluminum chloride and sodium chloride were added to the lithium iron phosphate filter residue obtained in step (1), with a molar ratio of the lithium element in the lithium iron phosphate filter residue, aluminum chloride, and sodium chloride being 1:1.35:1.045, and after uniform mixing, the resulting mixture was calcinated for 5 hours at a vacuum degree of -0.065 MPa and a temperature of 500 °C to obtain a calcination material.

During the calcination, the waste gas generated during the calcination was extracted through an induced draft fan, condensed through a condenser to a have a temperature of 135 °C, then filtered through a dust collection cloth bag, and then subjected to water spray absorption, to obtain a waste gas material.

Then 0.08 mol/L ammonia water solution was added to the waste gas material (a molar ratio of the nitrogen element in the ammonia water to the aluminum element in the waste gas material was 3.5:1), the resulting mixture was stirred and then reacted at 60 °C for 1.5 hours, the pH at the endpoint was controlled to be 7.9, then the resulting mixture was filtered and washed to obtain a precipitate which was sintered at a sintering temperature of 650 °C for 7 hours, to obtain aluminum oxide. The test results of the aluminum oxide are shown in Table 3.

Sodium carbonate was added to the filtrate obtained from the above filtration, the pH at the endpoint was controlled to be 10.5, and the reaction was carried out at a temperature of 75 °C for 1 hour, and then the resulting mixture was filtered and washed to obtain industrial grade lithium carbonate. The purity of the lithium carbonate was measured to be 99.35%. The test results of the industrial grade lithium carbonate are shown in Table 4.

**Table 3 Test Results of Aluminum Oxide**

| Indexes | Main contents | Li | Na | BET | Apparent bulk density | Tap density |
|---|---|---|---|---|---|---|
| Data | 99.5 wt% | 31.4 ppm | 11.6 ppm | 14.6 m²/g | 0.35 g/mL | 0.76 g/mL |

**Table 4 Test Results of Lithium Carbonate of Technical Grade**

| Indexes | Main contents | Na | K | Al | Fe | Cl⁻ | Acid-insoluble sub stance |
|---|---|---|---|---|---|---|---|
| Data | 99.2 wt% | 985 ppm | 12 ppm | 47.5 ppm | 19.6 ppm | 47.5 ppm | 43.5 ppm |
| Indexes | SO₄²⁻ | Ca | Mg | B | D50 particle size | BET | Apparent bulk density |
| Data | 12.5 ppm | 45.7 ppm | 24.2 ppm | 1.3 ppm | 5.8µm | 8.5 m²/g | 0.52 g/mL |

(4) A content of each element in the calcination material obtained in step (3) was detected. The test results are shown in Table 5 below.

**Table 5 Test Results of Element Contents in Calcination material**

| Element | Na | Fe | P | Li | C | Al | Cu |
|---|---|---|---|---|---|---|---|
| Content | 12.31 wt% | 31.35 wt% | 17.21 wt% | 0.12 wt% | 2.4 wt% | 139.6 ppm | 1.5 ppm |

Through calculation, a molar ratio of Na to Fe to P in the calcination material was 0.954:1:0.989. Therefore, sodium and phosphorus sources need to be added. Sodium carbonate and ammonium dihydrogen phosphate were added to the calcination material to reach a molar ratio of Na to Fe to P of 0.975:1:1.04, and a mixture was obtained after uniform mixing. Then sodium fluoride, a carbon source and pure water were added to the mixture, stirred and slurried. Glucose and sucrose in a mass ratio of 1:0.3 were used as the carbon source, and a mass of the carbon source (the sum of the masses of glucose and sucrose) was 0.25 times the mass of the calcination material. The molar ratio of sodium fluoride to iron element in the mixture was 0.97:1.

Then, the slurry obtained after stirring and slurrying was ground until a particle size of the solid particles in the slurry was 285 nm, and then spray dried, to obtain a spray-dried material with a particle size of 21.7 µm, and a water content of the spray-dried material was less than 0.5 wt%.

The spray-dried material was calcined to obtain a calcined material. During the calcination, the heating rate was 120 °C/h, then the temperature was maintained at 600 °C for 5 hours, followed by cooling the material to a temperature ≤ 100 °C before discharging. Nitrogen was introduced in the calcination process to maintain an oxygen content in the calcination furnace below 5 ppm and humidity below 3%. In the heating stage, an induced draft fan was connected for ventilation, and the waste gas in the heating stage was extracted.

The calcined material was pulverized via a jet mill until a particle size of the material was 1.4 µm. Then a 100-mesh ultrasonic vibrating screen was used for screening. Then a electromagnetic iron remover was used to remove iron until the magnetic substance in the material was below 1 ppm, and then the material was vacuum packaged in a constant temperature and humidity chamber to obtain carbon-coated sodium iron fluorophosphate which can be used as a cathode material for sodium batteries.

Test results of various aspects of carbon-coated sodium iron fluorophosphate prepared in this example are shown in Table 6 below.

**Table 6 Test Results of Carbon-Coated Sodium Iron Fluorophosphate**

| Indexes | Na | Fe | P | F | C | Free sodium | Al |
|---|---|---|---|---|---|---|---|
| Data | 20.12 wt% | 25.08 wt% | 14.41 wt% | 8.41 wt% | 2.45 wt% | 217 ppm | 107.6 ppm |
| Indexes | Ca | Mg | Co | Ni | Cu | Zn | Li |
| Data | 55.8 ppm | 79.5 ppm | 3.9 ppm | 1.1 ppm | 0.1 ppm | 23.7 ppm | 0.08 wt% |
| Indexes | pH | Tap density | Compacted density | BET | Powder resistivity | Moisture content | Magnetic foreign matter |
| Data | 10.98 | 0.82 g/mL | 2.26 g/mL | 17.35 m²/g | 11.8 Ω.cm | 697 ppm | 0.88 ppm |
| Indexes | D10 | D50 | D90 | | | | |
| Data | 0.2µm | 1.2µm | 9.9µm | | | | |
| Indexes | Charging capacity at the rate of 1C | Discharging capacity at the rate of 1C | Initial discharge efficiency | Dischargin g capacity at the rate of 0.5C | Discharging capacity at the rate of 1C | Capacity retention rate at - 20 °C | Cycling at 1C under room temperature |
| Data | 120.1 mAh/g | 118.3 mAh/g | 98.5% | 115.5 mAh/g | 112.6 mAh/g | 88.9% | A capacity retention rate was 95.6% after 450 cycles |
| Indexes | Iron dissolution | Median voltage | | | | | |
| Data | 24.1 ppm | 3.05 V | | | | | |

The compacted density was measured at a pressure of 3 T.

The powder resistivity was measured through the four-probe method at a pressure of 10 MPa.

Electrical performance was measured by using a 0.3Ah pouch battery, where the cathode current collector was carbon-coated aluminum foil, the cathode was made of the material of the example, SP and PVDF in a mass ratio of 88:7:5, the compacted density of the electrode sheet was 2.35g/mL, the electrolyte was sodium hexafluorophosphate, the anode current collector was aluminum foil, the anode was made of hard carbon which was obtained by subjecting asphalt to pretreatment and calcination at a high temperature. The measurement voltage ranged from 2.0V to 4.0V.

To measure the free sodium, 10g of the material was taken, 100g of pure water was added, the resulting mixture was stirred at 25 °C for 30 minutes, and then filtered, and the sodium ions in the filtrate were measured via ICP.

Fluorine was measured by using fluoride-ion selective electrodes.

To measure iron dissolution, 10g of material was taken, then soaked in 100 mL of hydrochloric acid at a molar concentration of 0.05 mol/L at a temperature of 40 °C for 30 minutes and then filtered, and the iron content of the filtrate was measured.

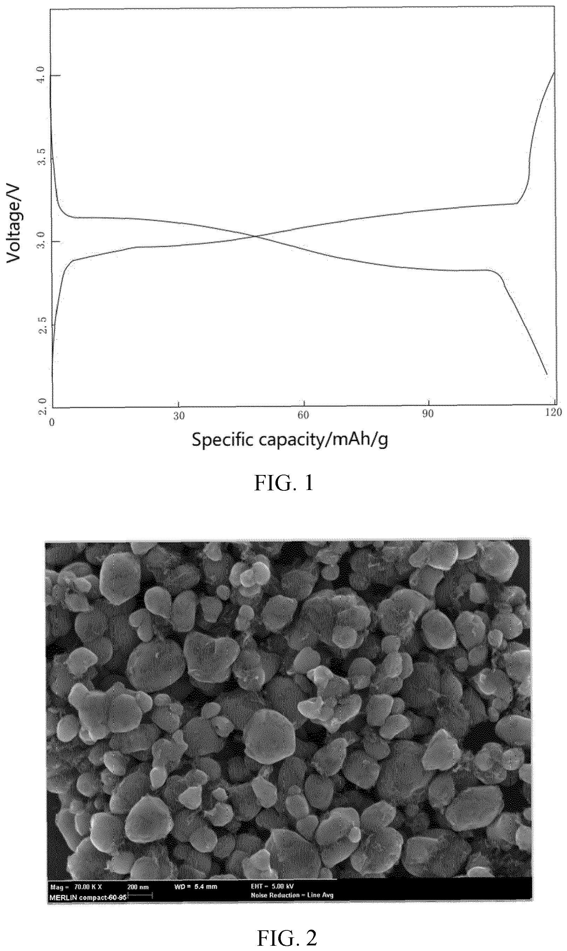

The charge-discharge curve at a rate of 0.1C is shown in FIG. 1. It can be seen from FIG. 1 that the carbon-coated sodium iron fluorophosphate prepared in this example had a clear discharge plateau and relatively small polarization.

The SEM image of the carbon-coated sodium iron fluorophosphate prepared is shown in FIG. 2.

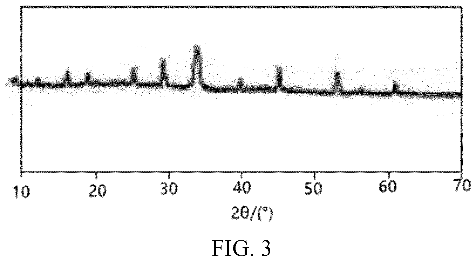

The XRD pattern of the carbon-coated sodium iron fluorophosphate prepared is shown in FIG. 3.

### Example 2

The method for preparing carbon-coated sodium iron fluorophosphate from waste lithium iron phosphate provided in this example was basically the same as that in Example 1, except that in step (4), the carbon source was replaced with polyethylene glycol and the mass of polyethylene glycol was 0.3 times the mass of the calcination material.

### Example 3

The method for preparing carbon-coated sodium iron fluorophosphate from waste lithium iron phosphate provided in this example was basically the same as that in Example 1, except that in step (4), the carbon source was replaced with starch and the mass of starch was 0.2 times the mass of the calcination material.

### Comparative Example 1

The method for preparing carbon-coated sodium iron phosphate from waste lithium iron phosphate provided in this comparative example was basically the same as that in Example 1, except that in step (4), sodium fluoride was not added. That is, the product prepared in the comparative example was carbon-coated sodium iron phosphate.

### Comparative Example 2

The method for preparing sodium iron fluorophosphate from waste lithium iron phosphate provided in this comparative example was basically the same as that in Example 1, except that in step (4), no additional carbon source was added, but a mixture of N₂ and H₂ were introduced during the calcination process for reduction. That is, the product prepared in this comparative example was sodium iron fluorophosphate and had a relatively less carbon coating on the surface.

The electrical performances of the carbon-coated sodium iron phosphate prepared in Comparative Example 1 and the sodium iron fluorophosphate prepared in Comparative Example 2 were measured, respectively (the test method was the same as that in Example 1). The results are shown in Table 7.

**Table 7 Test Results of Comparative Example 1 and Comparative Example 2**

| Example | Charging capacity at the rate of 1C | Dischargin g capacity at the rate of 1C | Initial discharge efficiency | Dischargin g capacity at the rate of 0.5C | Discharging capacity at the rate of 1C | Capacity retention rate at - 20 °C | Cycling at 1C under room temperature |
|---|---|---|---|---|---|---|---|
| Comparati ve Example 1 | 114.5 mAh/g | 105.7 mAh/g | 92.3% | 97.8 mAh/g | 92.1 mAh/g | 78.5% | A capacity retention rate was 93.7% after 450 cycles |
| Comparati ve Example 2 | 110.4 mAh/g | 101.2 mAh/g | 91.7% | 94.1 mAh/g | 87.5 mAh/g | 73.6% | A capacity retention rate was 91.3% after 450 cycles |

It can be seen from comparison among the test results of the electrical performance in Example 1, Comparative Example 1 and Comparative Example 2 that the capacity, initial efficiency and cycling performance in Example 1 are better.

Specifically, compared with Comparative Example 1, Example 1 has increased capacity because the introduction of fluoride ions leads to effective doping, causing an eutectic effect and improving ionic conductivity, thereby improving the capacity. In addition, the higher sodium content in sodium iron fluorophosphate than that in sodium iron phosphate also improves the theoretical capacity.

Compared with Comparative Example 2, Example 1 adopted appropriate carbon coating due to the poor electrical conductivity of the polyanionic sodium battery material, which can effectively improve electronic conductivity of the material. In addition, the appropriate carbon coating can also prevent growth of particles, making the primary particle size of the particles more uniform and effectively restraining the growth of the particles, thereby improving the capacity and the cycling performance.

In view of the above, the carbon-coated sodium iron fluorophosphate prepared through the method for preparing carbon-coated sodium iron fluorophosphate from waste lithium iron phosphate provided in the present invention has excellent electrochemical performance and can be used as a cathode material for the sodium battery.

Although the present invention is illustrated and described through specific embodiments, it should be noted that the foregoing embodiments are merely intended for describing the technical solutions of the present invention, but not for limiting the present invention. A person of ordinary skill in the art should understand that modifications may be made to the technical solutions described in the foregoing embodiments, or some or all technical features thereof maybe equivalently replaced without departing from the scope of the technical solutions of the embodiments of the present invention. Therefore, this means that all these replacements and modifications that fall within the scope of the present invention are included in the attached claims.

## Claims

1. A method for preparing carbon-coated sodium iron fluorophosphate from waste lithium iron phosphate, **characterized in that** the method comprises steps of:
(a) mixing a waste lithium iron phosphate material with an alkaline solution for reaction, followed by solid-liquid separation, to obtain an aluminum-containing filtrate and a lithium iron phosphate filter residue;
(b) mixing the lithium iron phosphate filter residue, aluminum chloride and sodium chloride uniformly, followed by vacuum calcination to obtain a calcination material; and
(c) mixing the calcination material with at least one of a sodium source, an iron source and a phosphorus source uniformly to obtain a mixture to which a fluorine source, a carbon source and a solvent are added for uniformly mixing, followed by drying and calcination sequentially to obtain the carbon-coated sodium iron fluorophosphate.

2. The method of claim 1, **characterized in that** in step (a), a mass ratio of the waste lithium iron phosphate material to the alkaline solution is 1:5-15;
preferably, the alkaline solution is a sodium hydroxide solution; and
preferably, a molar concentration of the alkaline solution is 3 mol/L to 5 mol/L.

3. The method of claim 2, **characterized in that** in step (a), the aluminum-containing filtrate is reused until a molar concentration of hydroxide ions in the aluminum-containing filtrate is below 0.2 mol/L to obtain a waste aluminum-containing solution;
preferably, step (a) further comprises recovering the waste aluminum-containing solution to prepare aluminum chloride and sodium carbonate; and
preferably, the recovering comprises: introducing carbon dioxide into the waste aluminum-containing solution to decrease a pH of the waste aluminum-containing solution to 9 to 11, followed by solid-liquid separation to obtain an aluminum hydroxide precipitate and a sodium carbonate filtrate; mixing the aluminum hydroxide precipitate with hydrochloric acid for reaction, followed by concentration and crystallization to obtain aluminum chloride; and concentrating and crystallizing the sodium carbonate filtrate to obtain sodium carbonate.

4. The method of claim 1, **characterized in that** in step (b), a molar ratio of lithium element in the lithium iron phosphate filter residue, the aluminum chloride, and the sodium chloride is 1:1.2-1.5:1.02-1.05;
preferably, in step (b), the vacuum calcination is performed at a temperature of 400 °C to 600 °C for 4 hours to 6 hours; and
a vacuum degree of the vacuum calcination is -0.04 MPa to -0.08 MPa.

5. The method of claim 1, **characterized in that** in step (b), a waste gas material produced from the vacuum calcination is collected and mixed with ammonia water for aluminum precipitation reaction, followed by solid-liquid separation to obtain a solid material which is sintered to obtain alumina, and a liquid material obtained from the solid-liquid separation is mixed with sodium carbonate for lithium precipitation reaction, followed by solid-liquid separation to obtain lithium carbonate;
preferably, a molar concentration of the ammonia water is 0.01 mol/L to 0.1 mol/L;
preferably, the aluminum precipitation reaction is performed at a temperature of 40 °C to 80 °C for 1 hour to 3 hours; and
preferably, the lithium precipitation reaction is performed at a temperature of 60 °C to 90 °C for 1 hour to 3 hours.

6. The method of claim 1, **characterized in that** in step (c), contents of Na element, Fe element and P element in the calcination material are determined before the calcination material is mixed with at least one of the sodium source, the iron source and the phosphorus source, and components are configured such that the mixture has Na element, Fe element and P element in a molar ratio of 0.95-0.98:1:1.02-1.05; and
preferably, the sodium source comprises at least one of sodium carbonate, sodium bicarbonate and sodium acetate; the iron source comprises at least one of iron oxide red, ferrous oxalate and iron acetate; and the phosphorus source comprises at least one of phosphoric acid, ammonium monohydrogen phosphate and ammonium dihydrogen phosphate.

7. The method of claim 1, **characterized in that** in step (c), the fluorine source comprises sodium fluoride;
preferably, a molar ratio of the fluorine source to Fe element in the mixture is 0.95-0.98:1;
preferably, in step (c), the carbon source comprises at least one of glucose, sucrose, polyethylene glycol and starch;
preferably, a mass ratio of the carbon source to the calcination material is 0.2-0.3:1; and
preferably, in step (c), the solvent comprises water and/or an organic solvent.

8. The method of claim 1, **characterized in that** in step (c), after adding the fluorine source, the carbon source and the solvent to the mixture to obtain a mixed slurry, grinding is performed for uniform mixing, preferably until a particle size of solid particles in the mixed slurry is 200 nm to 400 nm;
preferably, in step (c), the drying comprises spray drying; and more preferably, a particle size of a dried material obtained from the spray drying is 10 µm to 30 µm;
preferably, in step (c), the calcination is performed at a temperature of 550 °C to 650 °C, and a holding time of the calcination is 4 hours to 6 hours;
preferably, the step (c) further comprises pulverization, screening and iron removal in sequence after the calcination; and
preferably, a D50 particle size of the carbon-coated sodium iron fluorophosphate obtained after the pulverization and screening is 0.5 µm to 2 µm.

9. A cathode sheet prepared mainly with the carbon-coated sodium iron fluorophosphate produced through the method of any one of claims 1 to 8.

10. A sodium-ion battery, comprising the cathode sheet of claim 9.
